# EUROPEAN PATENT SPECIFICATION

(11) **EP 2 789 849 B1**
(45) Date of publication and mention of the grant of the patent: **05.10.2016**
(21) Application number: 12855997.8
(22) Date of filing: 04.12.2012
(51) Int. Cl.: F03D 13/25

(54) **FLOATING TYPE WIND TURBINE GENERATING APPARATUS**
SCHWIMMENDE WINDKRAFTANLAGE
DISPOSITIF GÉNÉRATEUR D'ÉNERGIE ÉOLIENNE DU TYPE FLOTTANT

(30) Priority: 05.12.2011 JP 2011265667
(43) Date of publication of application: 15.10.2014
(73) Proprietor: Mitsubishi Heavy Industries, Ltd., Tokyo 108-8215 (JP)
(72) Inventor: OHTA, Makoto, Tokyo 108-8215 (JP); KUMAMOTO, Hitoshi, Tokyo 108-8215 (JP); HONDA, Akihiro, Tokyo 108-8215 (JP); UEDA, Yoshinori, Tokyo 108-8215 (JP); YAMADA, Masato, Tokyo 108-8215 (JP)
(74) Representative: Intès, Didier Gérard André
(86) International application number: PCT/JP2012/081317
(87) International publication number: WO 2013/084856

(56) References cited:
- EP-A1- 2 221 474
- EP-A2- 2 311 725
- WO-A1-2009/067023
- WO-A1-2011/071444
- WO-A1-2011/120521
- WO-A2-2009/131826
- WO-A2-2011/137903
- WO-A2-2011/137903
- JP-A- 2011 007 085
- JP-A- 2011 521 820

## Description

### TECHNICAL FIELD

This invention relates to a floating type wind turbine generating apparatus including a floating body floating on the water surface, a wind turbine generator installed on the floating body, and a mooring device for mooring the floating body.

### BACKGROUND

In the case where a wind turbine generating apparatus is to be installed on the ocean and the like, a bottom-mounted type wind turbine generating apparatus is generally employed in a region where the water is shallow. A bottom-mounted type wind turbine generating apparatus includes a base disposed on the bottom of the water, and a wind turbine generator disposed on the base. However, in a region where the water is deep, the bottom-mounted type wind turbine generating apparatus is uneconomic. Therefore, using a floating type wind turbine generating apparatus would be considered.

As a conventional floating type wind turbine generating apparatus, there is known a wind turbine generating apparatus comprising a wind turbine generator installed on a floating body floating on the water surface (for instance, Patent Document 1). In the above floating type wind turbine generating apparatus, the floating body on which the wind turbine generator is installed is moored by connecting the floating body to the anchors disposed on the bottom of the water with mooring cables. Other conventional floating type wind turbine generating apparatuses are disclosed in EP2311725A and WO2011/137903A.

### Citation List

### Patent Literature

Patent Document 1: JP2001-165032A

### SUMMARY

### Technical Problem

When the floating body including the wind turbine generator is moored, drift force and rotational moment may be caused in the floating body by the influence of wind load acting on the wind turbine generator, wave load acting on the floating body, and the like. Thus, it is necessary to stably moor the floating body against the drift force and rotational moment as well.

Also, the applicant had just developed a floating type wind turbine generating apparatus comprising a floating body formed into a virtual triangular shape including three vertices in the planar view as a floating type wind turbine generating apparatus with excellent stability against wind and waves, low manufacturing and installing cost, and high generation efficiency regardless of wind directions. Thus, there was an urgent need to develop a mooring device for mooring the floating body having the above planar shape stably against drift force and rotational moment.

In view of the above backgrounds, and as a result of their diligent researches, the inventors found a mooring method of mooring the floating body stably against drift force and rotational moment, the floating body formed into a virtual triangular shape including three vertices in the planar view, thereby completing the present invention.

### Solution to Problem

The present invention is to solve the problems and to achieve the objects of the prior art as described above. A floating type wind turbine generating apparatus according to the present invention comprises:
a floating body floating on a water surface;
a wind turbine generator installed on the floating body; and
a mooring device configured to moor the floating body;
wherein the floating body is formed into a virtual triangular shape having three vertices in a planar view,
wherein the mooring device includes a plurality of mooring cables including a first mooring cable and a second mooring cable, the first mooring cable connected to one vertex of two vertices and the second mooring cable connected to other vertex of the two vertices, the two vertices excluding a vertex having a largest interior angle, and
wherein among the plurality of mooring cables, each of the first and second mooring cables extends in a direction such that the first and second mooring cables extend away from the floating body and intersect with each other in the planar view.

As described above, the floating type wind turbine generating apparatus according to the present invention is formed into a virtual triangular shape including three vertices in the planar view. The mooring device thereof includes a first mooring cable connected to one vertex of two vertices excluding a vertex having a largest interior angle (in a case where there are two or more vertices having the largest interior angle, excluding an arbitrary one of the two or more vertices) from among the three vertices of the virtual triangular shape. The mooring device also includes a second mooring cable connected to the other vertex of the above two vertices. Each of the first and second mooring cables extends in a direction such that the first and second mooring cables extend away from the floating body and intersect with each other in the planar view.

When drift force and rotational moment act on the floating body, the floating body rotates around the gravity center. At this time, with the first and second mooring cables being connected to the position and in the direction described above, one of the first and second mooring cables would be caused to extend in a direction opposite to the rotational direction of the floating body. As a result, the rotation of the floating body is stopped, which makes it possible to stably moor the floating body against the drift force and rotational moment.

In the present invention, "virtual triangular shape" means as a shape which has three vertices in the planar view, and which can be recognized as a substantially triangular shape when virtual lines are assumed to be connecting the three vertices. Thus, the virtual triangular shape of the present invention includes not only a triangular shape but also a substantially V-shape and the like, for instance.

In the above invention, the first mooring cable may extend in a direction substantially perpendicular to a line passing through a gravity center of the floating body and the one vertex in the planar view, and the second mooring cable may extend in a direction substantially perpendicular to a line passing through the gravity center of the floating body and the other vertex in the planar view.

With the first and second mooring cables extending substantially perpendicular to the line passing through the gravity center and the vertex of the floating body, one of the first and second mooring cables would be caused to extend in a direction directly opposite to the rotational direction of the floating body. As a result, the rotation of the floating body is effectively stopped, which makes it possible to moor the floating body even more stably against the drift force and rotational moment.

Further, in the above invention, the mooring device may further include a third mooring cable connected to the vertex having the largest interior angle, or in the case where there are two or more vertices having the largest interior angle, the arbitrary one of the two or more vertices from among the three vertices of the virtual triangular shape.

With the third mooring cable as described above, it is possible to moor the floating body even more stably.

Further, in the above invention, the floating body may be formed into a substantially V-shape in the planar view including three columns and two lower hulls connecting two of the three columns.

The floating type wind turbine generating apparatus including the floating body formed into the planar substantially V-shape has excellent stability against wind and waves, low manufacturing and installing cost, and high generation efficiency regardless of wind directions.

### Advantageous Effects

According to the present invention, it is possible to provide a floating type wind turbine generating apparatus capable of mooring the floating body stably against drift force and rotational moment, the floating body having a virtual triangular shape including three vertices in the planar view.

### BRIEF DESCRIPTION OF DRAWINGS

FIG. 1 is an oblique view of the floating type wind turbine generating apparatus according to the present invention.
FIG. 2 is a planar view of the floating type wind turbine generating apparatus according to the present invention.
FIG. 3 is a side view of the floating type wind turbine generating apparatus according to the present invention.
FIG. 4 is an oblique view of the internal configuration of the lower hull according to the present invention.
FIG. 5 is an oblique view of the floating type wind turbine generating apparatus according to another embodiment of the present invention.
FIG. 6 is a planar view of the floating type wind turbine generating apparatus according to another embodiment of the present invention.
FIG. 7 is a planar view of a modification of the floating type wind turbine generating apparatus according to the present invention.
FIG. 8 is a planar view for describing one embodiment of the floating type wind turbine generating apparatus according to the present invention.

### DETAILED DESCRIPTION

Embodiments of the present invention will now be described in detail with reference to the accompanying drawings. In the following description, the overall configuration of the floating type wind turbine generating apparatus according to the present invention will be first described. Then, the mooring device of the present invention will be described.

Hereinafter in the following description of the embodiments, a floating type wind turbine generating apparatus including a floating body formed into a substantially V-shape in the planar view is described as an example of the floating type wind turbine generating apparatus including a floating body formed into a virtual triangular shape in the planar view.

### (Floating type wind turbine generating apparatus 1)

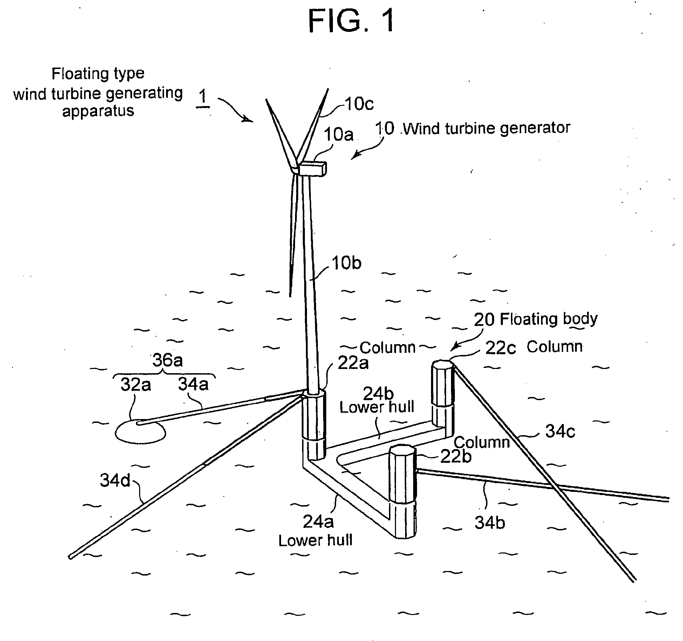

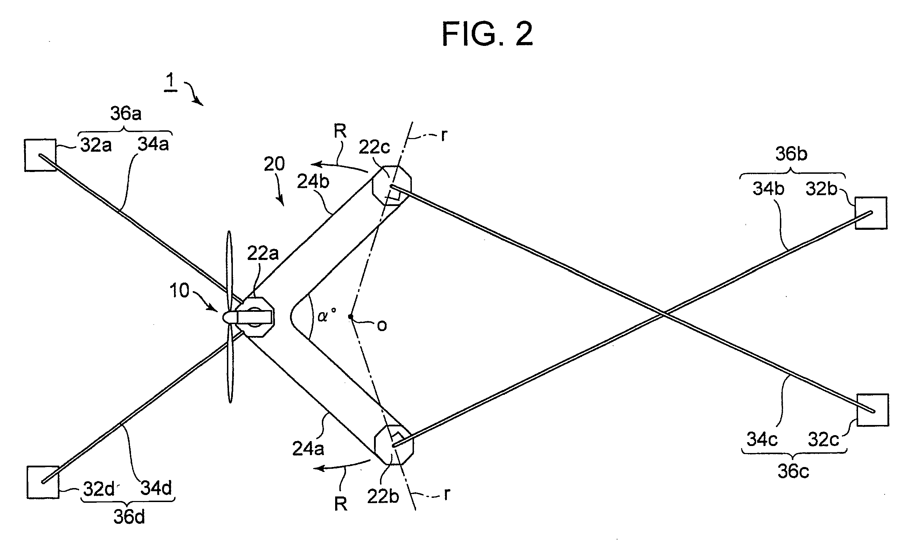

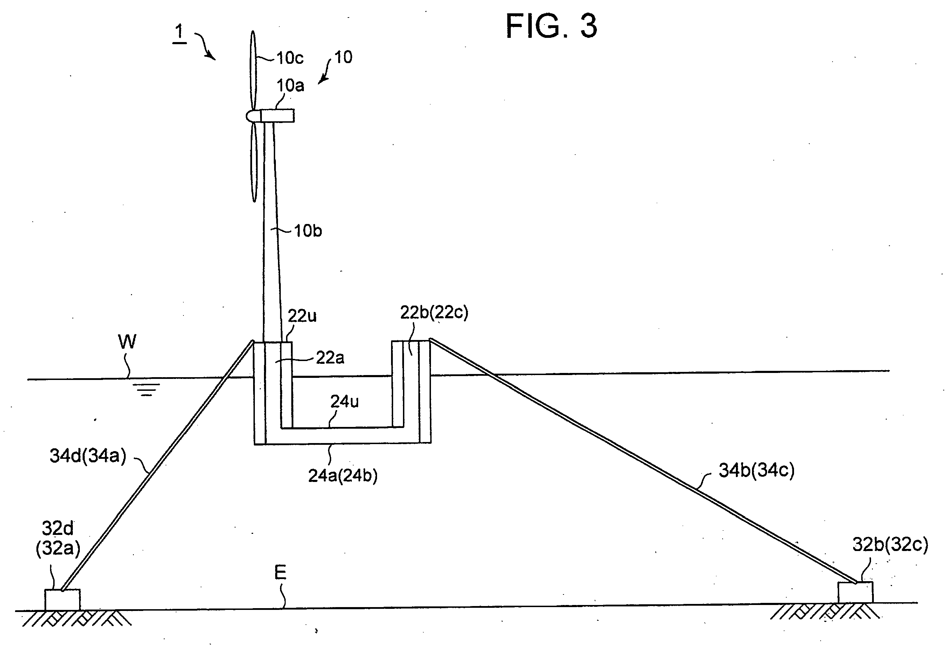

FIG. 1 is an oblique view of the floating type wind turbine generating apparatus according to the present invention. FIG. 2 is a planar view of the floating type wind turbine generating apparatus according to the present invention. FIG. 3 is a side view of the floating type wind turbine generating apparatus according to the present invention. As shown in FIGs. 1 to 3, the floating type wind turbine generating apparatus 1 according to the present invention includes a floating body 20 floating on the water surface, a wind turbine generator 10 installed on the floating body 20, and a mooring device 36 for mooring the floating body 20.

The floating body 20 includes three columns 22 (22a, 22b, 22c), the first lower hull 24a connecting the column 22a and column 22b, and the second lower hull 24b connecting the column 22a and column 22c. Accordingly, the floating body 20 is formed into a substantially V-shape in the planar view as shown in FIG. 2. The lower hulls 24 are formed to be hollow in the cross-sectional view as described below. Also, the columns 22 may also be hollow in the cross-sectional view because the buoyancy acting on the columns 22 increases stability of the floating body 20 as a whole.

Further, as shown in FIG. 3, the top faces 22u of the columns 22 are formed to be positioned above the top faces 24u of the lower hulls 24. Also, when floatably installed, the top faces 24u of the lower hulls 24 are submerged and the top faces 22u of the columns 22 are protruding from the water surface. A wind turbine generator 10 is disposed on the top face of the column 22a positioned in the middle of the above described three columns 22.

The wind turbine generator 10 includes a nacelle 10a, a tower 10b fixed on the top face of the column 22a, and a blade 10c rotatably mounted on the nacelle 10a. The nacelle 10a is supported by the tower 10b rotatably in the axial direction of the tower 10b. The nacelle 10a is thereby configured to orient the blade 10c to the upwind side in accordance with the wind direction.

The floating body 20 is configured such that its drift and rotation are prevented by a mooring device 36 described below. The mooring device 36 includes anchors 32 fixed to the bottom of the water and mooring cables 34 connecting the floating body 20 to the anchors.

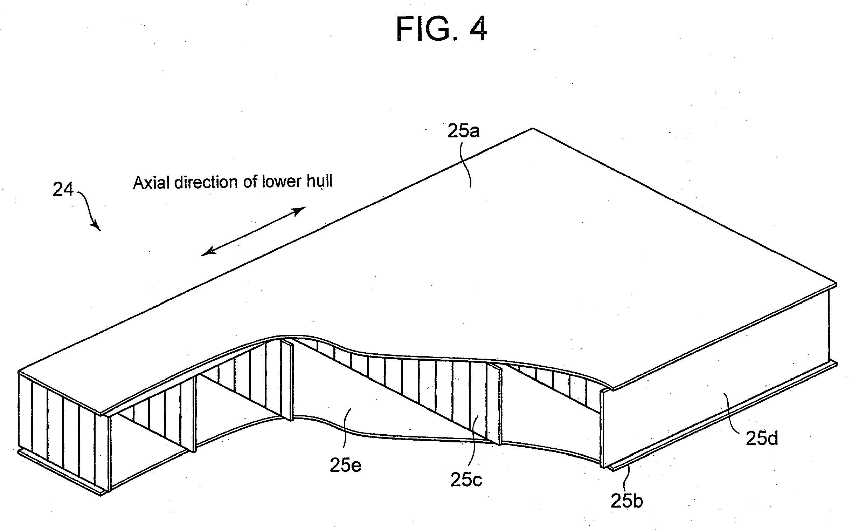

As shown in FIG. 4, the inside of the lower hulls 24 is formed to be hollow in the cross-sectional view surrounded by a deck outer plate 25a, a bottom outer plate 25b and a side outer plate (not shown). Also, a plurality of lateral partition walls 25c (partition walls) is formed in a direction perpendicular to the axial direction of the lower hulls 24. The lateral partition walls 25c thereby divide the inside of the lower hulls 24 into a plurality of watertight compartments 25e. Further, an injecting device (not shown) capable of injecting water into each of the compartments 25e is provided. Herein, longitudinal partition walls 25d may be formed inside the lower hulls 24, extending in the axial direction of the lower hulls 24.

Then, water is injected into the compartments 25e with the above described injecting device, so that the top faces 24 of the lower hulls 24 are sunk under the water and the top faces 22u of the columns 22 protrude from the water surface. Also, the floating body 20 is moored by the above described mooring device 36. As a result, the floating type wind turbine generating apparatus 1 of the present invention is floatably installed on the water.

The floating type wind turbine generating apparatus 1 of the present invention with the above configuration includes the floating body 20 formed into a substantially V-shape in the planar view including three columns 22 and two hollow lower hulls 24 connecting two of the three columns 22. The wind turbine generator 10 is disposed on the top face of the column 22a positioned in the middle of the three columns 22. As shown in FIG. 3, it is possible for the floating body 20 having a substantially V-shape in the planar view to have a long distance between the column 22 and the gravity center position "o" of the whole. As a result, stability against sway is increased. Also, as it is possible to reduce the number of lower hulls compared to a polygonal shape such as a triangular shape, it is possible to reduce the manufacturing cost of the floating body.

Injecting water into the hollow lower hulls 24 causes the floating body 20 to be floatably installed on the water in the state where the top faces 24u of the lower hulls 24 are submerged and the top faces 22u of the columns 22 protrude from the water surface. As a result, such a configuration is achieved that the floating body 20 is less likely to sway in wind or waves since it is installed on the water in the state where the top faces 24u of the lower hulls 24 are under the water.

In the present invention, the angle α formed by the lower hull 24a and the lower hull 24b is not particularly limited. However, the angle α being too small (closer to zero) causes unsteadiness against right-to-left sway and thus is not preferable. Also, the angle α being too large (closer to 180 degrees) causes unsteadiness against front-to-back sway and thus is not preferable. Accordingly, the angle α of the present invention may be preferably 60 to 120 degrees inclusive, more preferably 75 to 105 degrees inclusive, and above all 90 degree is the most preferable.

Further, with the compartments 25e formed in the axial direction, it is possible to control the amount of the water injected into the lower hulls 24 by appropriately selecting compartments 25e to be injected and compartments 25e not to be injected. As a result, it is possible to control the amount of the water injected so that the top faces 24u of the lower hulls 24 are underwater and the top faces 22u of the columns 22 are out of the water surface. Also, the gravity center position of the whole may be adjusted so as to enhance stability of the whole by increasing the length between the column 22 and the gravity center position of the whole.

In the above embodiment, the wind turbine generator 10 is disposed on only the column 22a positioned in the middle of the three columns 22. That is, the floating type wind turbine generating apparatus 1 is configured to have one wind turbine generator 10 disposed on one floating body 20. With this configuration, it is not necessary to take into account interference of the wind turbines that may occur in the case where a plurality of wind turbine generators is provided for one floating body. As a result, it is possible to reduce the size of the floating body 20 and to lower the manufacturing cost of the floating body 20. Also, interference of the wind turbines does not occur even when the wind blows in all directions. As a result, it is possible to maintain high generation efficiency of the wind turbine generator 10.

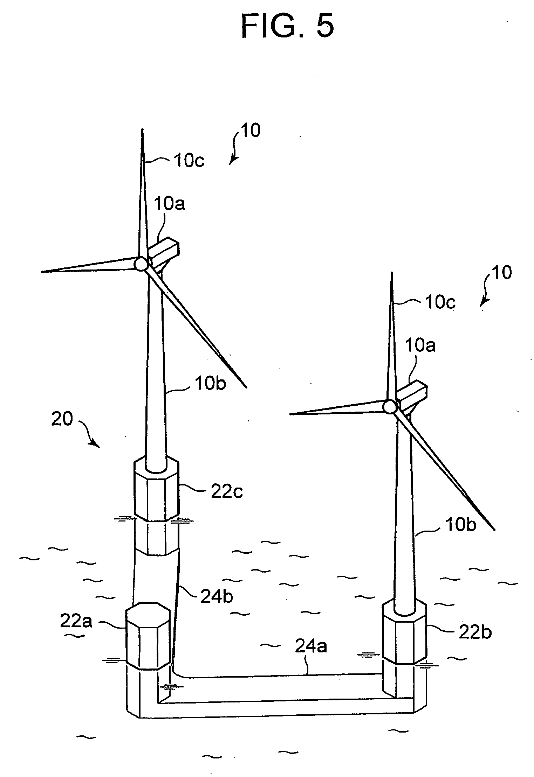

Further, as shown in FIG. 5, the wind turbine generator 10 may be disposed on each of the columns 22b, 22c positioned on the respective ends of the three columns 22 in the floating type wind turbine generating apparatus 1. That is, it is possible to provide two wind turbine generators 20 for one floating body 20 in the floating type wind turbine generating apparatus 1.

In the case where the floating type wind turbine generating apparatus 1 is floatably installed in a place where the wind flows only in nearly single reciprocating direction throughout a year, such as the reciprocating direction from east to west and from west to east for instance, only the interference of wind turbine generators 10 in the reciprocating direction needs to be taken into consideration. Therefore, by disposing a wind turbine generator 10 on each of the columns 22b, 22c disposed on the respective ends of the three columns 22, it is possible to provide two wind turbine generators 10 for one floating body 20 without detracting from the power generation efficiency.

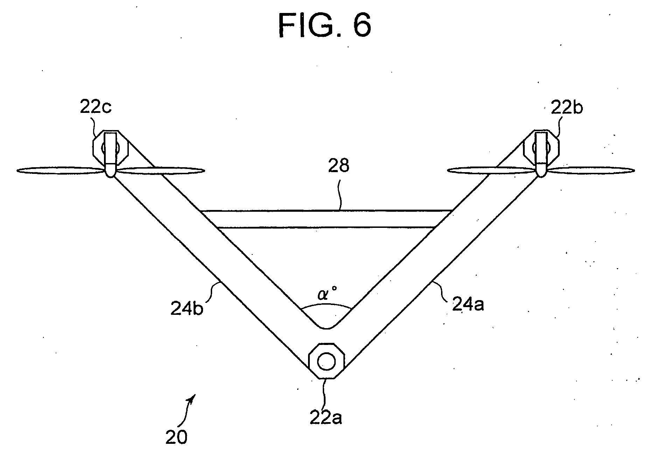

Further, in the floating type wind turbine generating apparatus 1 of the present invention, two lower hulls 24a, 24b may be connected to each other by a beam member 28. That is, as shown in FIG. 6, the floating type wind turbine generating apparatus 1 may be formed into a substantially reversed A-shape in the planar view.

In the case of the floating body formed into a substantially V-shape in the planar view, the stress concentrates the most on the connection part between the two lower hulls 24. With two lower hulls 24a, 24b connected by a beam member 28 to form a substantially reversed A-shape in the planar view as shown in FIG. 6, the stress concentration on the connection part would be reduced.

### (Mooring device 36)

Next, the mooring device 36 of the floating type wind turbine generating apparatus 1 according to the present invention will now be described.

As shown in FIG. 2, for the mooring device 36 of the present invention, each of the columns 22a, 22b, 22c is disposed on the corresponding one of the three vertices of the virtual triangular shape in the planar view. The vertex on which the column 22a is positioned has the largest interior angle among the three vertices. Also, a mooring cable 34b (the first mooring cable) is connected to the column 22b and a mooring cable 34c (the second mooring cable) is connected to the column 22c. Each of the mooring cables 34b, 34c extends in a direction such that they extend away from the floating body 20 and do not intersect each other in the planar view.

When drift force and rotational moment act on the floating body 20, the floating body 20 rotates around the gravity center "o" of the floating body 20. At this time, with the mooring cables 34b, 34c being connected to the position and in the direction described above, one of the mooring cables 34b, 34c would be caused to extend in a direction opposite to the rotational direction R of the floating body 20. As a result, the rotation of the floating body 20 is stopped, which makes it possible to stably moor the floating body 20 against the drift force and rotational moment.

Further, each of the mooring cables 34b, 34c may extend in a direction substantially perpendicular to a line "r" passing through the gravity center "o" of the floating body 20 and the columns 22b, 22c in the planar view. That is, whichever direction the floating body 20 may rotate in, one of the mooring cables 34b, 34c would be caused to extend in a direction directly opposite to the rotational direction R of the floating body 20. As a result, the rotation of the floating body 20 is effectively stopped, which makes it possible to moor the floating body 20 even more stably against the drift force and rotational moment.

Further, as shown in FIG. 2, the mooring device 36 of the present invention includes a mooring cable 34a (the third mooring cable) connected to the column 22a. With the mooring cable 34a provided in addition to the mooring cables 34b, 34c, it is possible to moor the floating body 20 even more stably. Although two mooring cables 34a are connected to the column 22a in the embodiment shown in FIG. 2, the present invention is not limited to this and at least one or more mooring cable 34a may be connected.

Embodiments of the present invention were described in detail above, but the present invention is not limited thereto, and various amendments and modifications may be implemented within a scope that does not depart from the present disclosure.

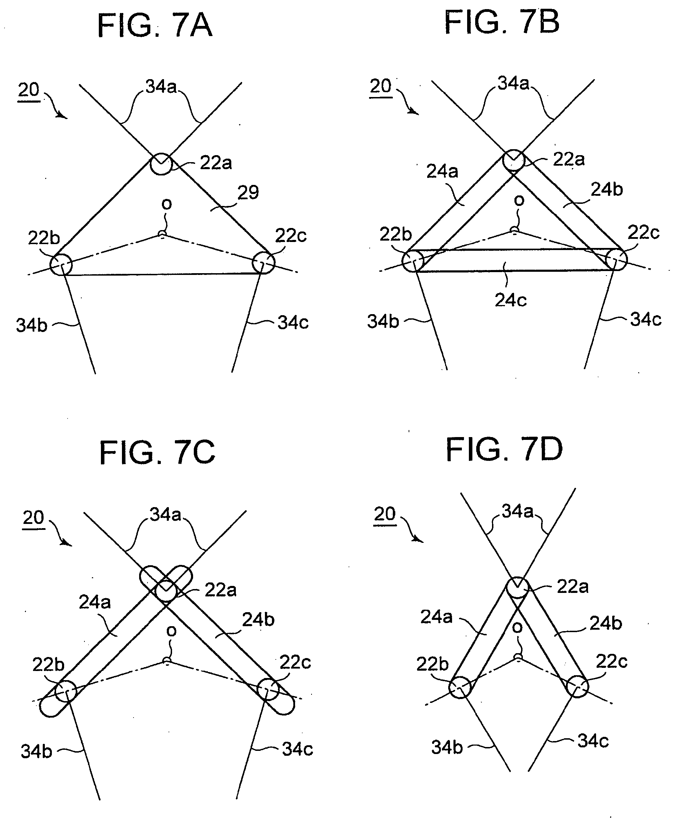

For instance, while a floating body 20 of a substantially V-shape is described in the above embodiment as an example of a floating body formed into a virtual triangular shape in the planar view, "virtual triangular shape" of the present invention means a shape which has three vertices in the planar view, and which can be recognized as a substantially triangular shape when virtual lines are assumed to be connecting the three vertices. For instance, the floating body 20 may have a triangular plate 29 as shown in FIG. 7A. Also, three lower hulls 24a, 24b, 24c may be assembled into a triangular shape as shown in FIG. 7B. Moreover, the lower hulls 24 may be partially protruding from the column 22 in the floating body 20 of a substantially V-shape in the planar view as shown in FIG. 7C.

Further, when there are two or more vertices having the largest interior angle in a virtual triangular shape like a virtual equilateral triangular shape shown in FIG. 7D, an arbitrary one of the two or more vertices may be regarded as the above described vertex with the largest interior angle.

Next, the result of mooring simulation performed for the floating type wind turbine generating apparatus 1 of the present invention will now be described.

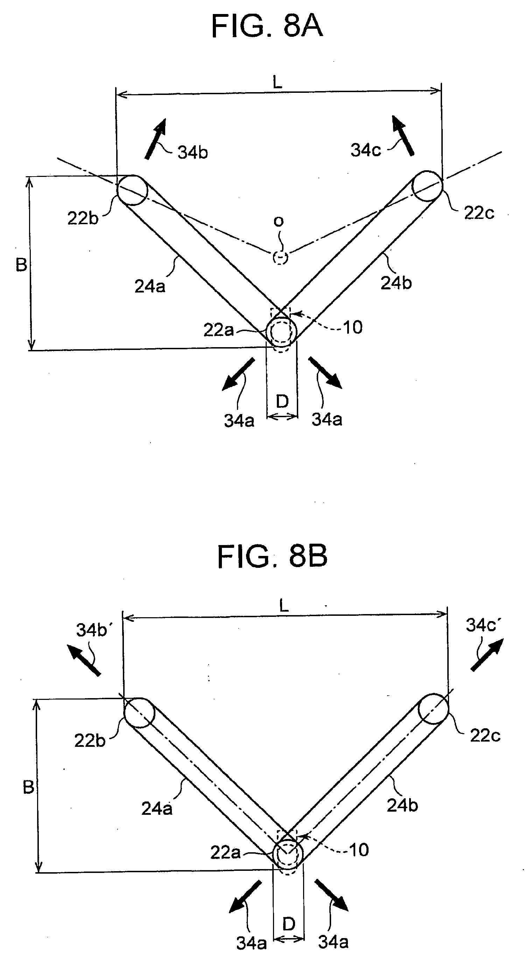

In the mooring simulation, configuration shown in FIG. 8A is used as the embodiment while configuration shown in FIG. 8B is used as the comparable example in order to verify the difference in the maximum tension acting on the mooring cables, the difference caused by varying the extending direction of the mooring cables.

The configuration of the floating body 20, the rated power of the wind turbine generator 10, and the like are the same in the embodiment and the comparable example as shown below:

| <Floating body 20> | |
|---|---|
| Length of the floating body (L) | : 94.0m |
| Breadth of the floating body (B) | : 53.0m |
| Diameter of the columns (D) | : 12.0m |
| Depth of the columns | : 30.0m |
| Waterline | : 15.0m |
| Displacement capacity | : 11,200ton |

| <Wind turbine generator 10> | |
|---|---|
| Rated power | : 2.4MW |

The simulation was performed using two types of mooring cables, synthetic fiber rope and steel chain, in each of the embodiment and the comparable example.

Chart 1 shows the maximum tension, which occurred in the mooring cables in each case where drift force and rotational moment are caused in the floating body by applying the same load in the embodiment and the comparable example. For the validity in Chart 1, "YES" indicates that the bearing force of the mooring cables is greater the maximum tension, while "NO" indicates that the bearing force of the mooring cables is less than the maximum tension.

**[Chart 1]**

| Case | Cable type | Cable length (m) | Cable diameter (mm) | Maximum tension | Validity |
|---|---|---|---|---|---|
| Embodiment 1 | Synthetic resin rope | 500 | 80 | 600 kN | YES |
| Embodiment 2 | Steel chain | 600 | 100 | 1,000 kN | YES |
| Comparable 1 | Synthetic resin rope | 600 | 100 | 8,500 kN | NO |
| Comparable 2 | Steel chain | 600 | 100 | 18,000 kN | NO |

As can be seen from Chart 1, the maximum tension caused in the mooring cables is considerably reduced in the embodiment compared to the comparable example. Also, among the types of the mooring cables, it was confirmed that the maximum tension caused in the mooring cables is reduced to a greater extent with the synthetic fiber rope having great stretching property compared to the steel chain.

### Industrial Applicability

The present invention is applicable to a floating type wind turbine generating apparatus including a floating body floating on the water surface, a wind turbine generator installed on the floating body, and a mooring device for mooring the floating body.

## Claims

1. A floating type wind turbine generating apparatus (1) comprising:
a floating body (20) floating on a water surface;
a wind turbine generator (10) installed on the floating body (20); and
a mooring device (36) configured to moor the floating body (20);
wherein the floating body (20) is formed into a virtual triangular shape having three vertices in a planar view,
wherein the mooring device (36) includes a plurality of mooring cables including a first mooring cable (34b) and a second mooring cable (34c), the first mooring cable (34b) is connected to one vertex of two vertices and the second mooring cable (34c) is connected to other vertex of the two vertices, the two vertices excluding a vertex having a largest interior angle, and
wherein among the plurality of mooring cables, each of the first and second mooring cables (34b 34c) extends in a direction such that the first and second mooring cables (34b 34c) extend away from the floating body (20) and intersect with each other in the planar view.

2. The floating type wind turbine generating apparatus (1) according to claim 1, wherein the plurality of mooring cables further includes at least one mooring cable (34a) connected to the vertex having a largest interior angle.

3. The floating type wind turbine generating apparatus (1) according to claim 1 or 2,
wherein the first mooring cable (34b) extends in a direction substantially perpendicular to a line passing through a gravity center of the floating body (20) and the one vertex in the planar view, and
wherein the second mooring cable (34c) extends in a direction substantially perpendicular to a line passing through the gravity center of the floating body (20) and the other vertex in the planar view.

4. The floating type wind turbine generating apparatus (1) according to claim 1, 2 or 3, further comprising
a third mooring cable (34a) connected to the vertex having the largest interior angle, or, in the case where there are two or more vertices having the largest interior angle, the arbitrary vertex of the two or more vertices from among the three vertices of the virtual triangular shape.

5. The floating type wind turbine generating apparatus (1) according to any of claims 1 to 4, wherein the floating body (20) is formed into a substantially V-shape in the planar view including three columns (22) and a first and a second lower hulls (24a, 24b) connecting two of the three columns (22).

6. The floating type wind turbine generating apparatus (1) according to claim 5, wherein an angle α formed by the first lower hull (24a) and the second lower hull (24b) is in the range of 75 to 120 degrees.

7. The floating type wind turbine generating apparatus (1) according to claim 5, wherein an angle α formed by the first lower hull (24a) and the second lower hull (24b) is in the range of 75 to 105 degrees.

8. The floating type wind turbine generating apparatus (1) according to claim 5, wherein an angle α formed by the first lower hull (24a) and the second lower hull (24b) is equal to 90 degrees.

## Patentansprüche

1. Schwimmende Windturbinen-Stromerzeugungsvorrichtung (1), umfassend:
einen Schwimmkörper (20), der auf einer Wasseroberfläche schwimmt,
einen Windturbinengenerator (10), der auf dem Schwimmkörper (20) montiert ist, und
eine Vertäuvorrichtung (36), die dafür konfiguriert ist, den Schwimmkörper (20) zu vertäuen,
wobei der Schwimmkörper (20) - in einer Draufsicht betrachtet - zu einer virtuellen dreieckigen Form ausgebildet ist, die drei Scheitelpunkte aufweist,
wobei die Vertäuvorrichtung (36) mehrere Vertäuseile enthält, einschließlich eines ersten Vertäuseils (34b) und eines zweiten Vertäuseils (34c), wobei das erste Vertäuseil (34b) mit einem Scheitelpunkt von zwei Scheitelpunkten verbunden ist und das zweite Vertäuseil (34c) mit einem anderen Scheitelpunkt der zwei Scheitelpunkte verbunden ist, wobei die zwei Scheitelpunkte einen Scheitelpunkt ausschließen, der einen größten Innenwinkel aufweist, und
wobei sich unter den mehreren Vertäuseilen sowohl das erste als auch das zweite Vertäuseil (34b, 34c) in einer solchen Richtung erstrecken, dass sich das erste und das zweite Vertäuseil (34b, 34c) von dem Schwimmkörper (20) fort erstrecken und in der Draufsicht einander überkreuzen.

2. Schwimmende Windturbinen-Stromerzeugungsvorrichtung (1) nach Anspruch 1, wobei die mehreren Vertäuseile ferner mindestens ein Vertäuseil (34a) enthalten, das mit dem Scheitelpunkt verbunden ist, der einen größten Innenwinkel aufweist.

3. Schwimmende Windturbinen-Stromerzeugungsvorrichtung (1) nach Anspruch 1 oder 2,
wobei sich das erste Vertäuseil (34b) in einer Richtung im Wesentlichen senkrecht zu einer Linie erstreckt, die in der Draufsicht durch einen Masseschwerpunkt des Schwimmkörpers (20) und den einen Scheitelpunkt verläuft, und
wobei sich das zweite Vertäuseil (34c) in einer Richtung im Wesentlichen senkrecht zu einer Linie erstreckt, die in der Draufsicht durch einen Masseschwerpunkt des Schwimmkörpers (20) und den anderen Scheitelpunkt verläuft.

4. Schwimmende Windturbinen-Stromerzeugungsvorrichtung (1) nach Anspruch 1, 2 oder 3, ferner umfassend:
ein drittes Vertäuseil (34a), das mit dem Scheitelpunkt verbunden ist, der den größten Innenwinkel aufweist, oder in dem Fall, wo zwei oder mehr Scheitelpunkte den größten Innenwinkel aufweisen, mit einem beliebigen Scheitelpunkt der zwei oder mehr Scheitelpunkte unter den drei Scheitelpunkten der virtuellen Dreiecksform verbunden ist.

5. Schwimmende Windturbinen-Stromerzeugungsvorrichtung (1) nach einem der Ansprüche 1 bis 4, wobei der Schwimmkörper (20) in der Draufsicht zu einer im Wesentlichen V-Form ausgebildet ist, die drei Säulen (22) und einen ersten und einen zweiten unteren Rumpf (24a, 24b), die zwei der drei Säulen (22) verbinden, enthält.

6. Schwimmende Windturbinen-Stromerzeugungsvorrichtung (1) nach Anspruch 5, wobei ein Winkel α, der durch den ersten unteren Rumpf (24a) und den zweiten unteren Rumpf (24b) gebildet wird, im Bereich von 75 bis 120 Grad liegt.

7. Schwimmende Windturbinen-Stromerzeugungsvorrichtung (1) nach Anspruch 5, wobei ein Winkel α, der durch den ersten unteren Rumpf (24a) und den zweiten unteren Rumpf (24b) gebildet wird, im Bereich von 75 bis 105 Grad liegt.

8. Schwimmende Windturbinen-Stromerzeugungsvorrichtung (1) nach Anspruch 5, wobei ein Winkel α, der durch den ersten unteren Rumpf (24a) und den zweiten unteren Rumpf (24b) gebildet wird, gleich 90 Grad ist.

## Revendications

1. Dispositif générateur à turbine éolienne de type flottant (1) comprenant :
un corps flottant (20) flottant sur une surface d'eau ;
un générateur à turbine éolienne (10) installé sur le corps flottant (20) ; et
un dispositif d'amarrage (36) configuré pour amarrer le corps flottant (20) ;
où le corps flottant (20) est formé selon une forme triangulaire virtuelle comprenant trois sommets dans une vue plane,
où le dispositif d'amarrage (36) comprend une pluralité de câbles d'amarrage comprenant un premier câble d'amarrage (34b) et un deuxième câble d'amarrage (34c), le premier câble d'amarrage (34b) étant relié à un sommet des deux sommets et le deuxième câble d'amarrage (34c) étant relié à l'autre des deux sommets, les deux sommets excluant un sommet ayant un angle interne plus grand, et
où parmi la pluralité des câbles d'amarrage, chacun des premier et deuxième câbles d'amarrage (34b, 34c) s'étend suivant une direction de sorte que les premier et deuxième câbles d'amarrage (34b, 34c) s'étendent en éloignement du corps flottant (20) et se croisent l'un avec l'autre dans la vue plane.

2. Dispositif générateur à turbine éolienne de type flottant (1) selon la revendication 1, où la pluralité de câbles d'amarrage comprend en outre au moins un câble d'amarrage (34a) relié au sommet ayant un angle interne plus grand.

3. Dispositif générateur à turbine éolienne de type flottant (1) selon la revendication 1 ou 2, où le premier câble d'amarrage (34b) s'étend suivant une direction essentiellement perpendiculaire à une ligne traversant un centre de gravité du corps flottant (20) et le un sommet dans la vue plane ; et
où le deuxième câble d'amarrage (34c) s'étend suivant une direction essentiellement perpendiculaire à une ligne traversant le centre de gravité du corps flottant (20) et l'autre sommet dans la vue plane.

4. Dispositif générateur à turbine éolienne de type flottant (1) selon la revendication 1, 2 ou 3, comprenant en outre
un troisième câble d'amarrage (34a) relié au sommet ayant l'angle interne plus grand, ou, au cas où il existerait deux sommets ou plus ayant l'angle interne le plus grand, un sommet arbitraire des deux sommets ou plus parmi les trois sommets de la forme triangulaire virtuelle.

5. Dispositif générateur à turbine éolienne de type flottant (1) selon l'une quelconque des revendications 1 à 4, le corps flottant (20) ayant essentiellement une forme en V dans la vue plane comprenant trois colonnes (22) et une première et une seconde coques inférieures (24a, 24b) reliant deux des trois colonnes (22).

6. Dispositif générateur à turbine éolienne de type flottant (1) selon la revendication 5, où un angle α formé par la première coque inférieure (24a) et la seconde coque inférieure (24b) est dans la plage allant de 75 à 120 degrés.

7. Dispositif générateur à turbine de type flottant (1) selon la revendication 5, où un angle α formé par la première coque inférieure (24a) et la seconde coque inférieure (24b) est dans la plage allant de 75 à 105 degrés.

8. Dispositif générateur à turbine de type flottant (1) selon la revendication 5, où un angle α formé par la première coque inférieure (24a) et la seconde coque inférieure (24b) est égal à 90 degrés.
